# EUROPEAN PATENT APPLICATION

(11) **EP 4 550 873 A1**
(43) Date of publication of application: **07.05.2025**
(21) Application number: 22948327.6
(22) Date of filing: 28.06.2022
(51) Int. Cl.: H04W 24/10

(54) **TIMING ADVANCE REPORTING (TAR) TRIGGERING METHOD AND APPARATUS, AND DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/102077
(87) International publication number: WO 2024/000207

(57) **Abstract**

The present disclosure provides a TAR triggering method and apparatus, and a device and a storage medium. The method comprises: in response to a received connection reconfiguration message for indicating a switching command, executing a switching process; and at a particular moment in the switching process, instructing a media access control (MAC) layer of a terminal device to trigger TAR. The method provided in the present disclosure can avoid the situation whereby "triggered TAR is mistakenly canceled due to the execution of MAC reset", thereby ensuring that the TAR can be successfully reported, and can also avoid the situation whereby "a network device mistakenly considers that reconfiguration has failed and re-schedules resources for a terminal device because a connection reconfiguration completion message is not sent in a timely manner", thereby preventing an unnecessary waste of resources.

## Description

### TECHNICAL FIELD

The disclosure relates to the field of communication technologies, and in particular, to a method and an apparatus for triggering Timing Advance Reporting (TAR), a device and a storage medium.

### BACKGROUND

In a communication system, after receiving a switching command, the terminal device will execute a switching process. During the downlink synchronization step with the target cell during the switching process, the terminal device will instruct the media access control (MAC) layer to trigger Timing Advance Reporting (TAR) for subsequent reporting to the network device. However, the terminal device will also perform MAC reset during the switching process. Due to the cancellation of the triggered TAR when the UE performs MAC reset, TAR cannot be successfully sent.

### SUMMARY

The present disclosure proposes a method and an apparatus for triggering TAR, a device and a storage medium, to solve the technical problem of TAR being unable to be successfully sent due to the easy cancellation of triggered TAR by related technical methods.

In a first aspect, embodiments of the present disclosure provide a method for triggering TAR. The method is performed by a terminal device, and includes:
in response to receiving a connection reconfiguration message for indicating a switching command, executing a switching process; and
instructing a media access control (MAC) layer of the terminal device to trigger TAR at a specific moment in the switching process.

In this disclosure, a method for triggering TAR is provided, in which the terminal device executes a switching process in response to receiving a connection reconfiguration message for indicating a switching command, and the terminal device instructs the MAC layer to trigger TAR at a specific moment during the switching process. The specific moment can be at least one of moment after completing MAC reset, moment after completing configuration of the MAC layer, moment after completing connection reconfiguration, or moment after generating a connection reconfiguration complete message. From this, it can be seen that in the method of the present disclosure, the TAR will be triggered after MAC reset or after completing the configuration of the MAC layer, which can avoid the situation of "the triggered TAR being mistakenly cancelled due to the execution of MAC reset" and ensure that the TAR can be successfully reported. In addition, in the method of the present disclosure, TAR will be triggered after completing the connection reconfiguration or generating the connection reconfiguration complete message, which can generate and send the reconfiguration complete message in a timely manner, avoiding the situation where the network device mistakenly believe that the reconfiguration has failed and reschedule resources for the terminal device due to the failure to send the connection reconfiguration complete message in a timely manner, and preventing unnecessary waste of resources.

Optionally, the specific moment includes at least one of:
moment after completing MAC reset;
moment after completing configuration of the MAC layer;
moment after completing connection reconfiguration; and
moment after generating a connection reconfiguration complete message.

Optionally, in response to the connection reconfiguration message including reconfiguration with sync, and TAR being configured, the specific moment includes at least one of:
moment after the terminal device completes MAC reset in executing a reconfiguration with sync process;
moment after the terminal device completes configuration of a lower layer of the terminal device according to special cell common configuration in executing a reconfiguration with sync process;
moment after the terminal device completes configuration of the MAC layer of the terminal device according to MAC cell group configuration in executing a cell group configuration process;
moment before the terminal device sets content of radio resource control reconfiguration complete;
moment after the terminal device sets content of radio resource control reconfiguration complete;
moment before the terminal device submits a radio resource control reconfiguration complete message to a lower layer of the terminal device; and
moment after the terminal device submits a radio resource control reconfiguration complete message to a lower layer of the terminal device.

Optionally, in response to the connection reconfiguration message including mobility control information, and TAR being configured, the specific moment includes at least one of:
moment after the terminal device completes radio resource configuration according to radio resource dedicated configuration;
moment before the terminal device sets radio resource control connection reconfiguration complete;
moment after the terminal device sets radio resource control connection reconfiguration complete;
moment before the terminal device submits a radio resource control connection reconfiguration complete message to a lower layer of the terminal device; and
moment after the terminal device submits a radio resource control connection reconfiguration complete message to a lower layer of the terminal device.

Optionally, instructing the MAC layer of the terminal device to trigger TAR includes:
instructing the MAC layer of the terminal device to trigger TAR through an RRC layer of the terminal device.

Optionally, the method further includes:
reporting TAR to a network device.

In a second aspect, embodiments of the present disclosure provide a method for triggering TAR. The method is performed by a network device, and includes:
sending a connection reconfiguration message for indicating a switching command to a terminal device.

Optionally, the method further includes:
receiving TAR reported by the terminal device.

In a third aspect, embodiments of the present disclosure provide a communication device. The device is configured in a network device, and includes:
a processing module, configured to execute a switching process in response to receiving a connection reconfiguration message for indicating a switching command;
the processing module is further configured to instruct a MAC layer of the terminal device to trigger TAR at a specific moment in the switching process.

In a fourth aspect, embodiments of the present disclosure provide a communication device. The device is configured in a terminal device, and includes:
a transceiver module, configured to send a connection reconfiguration message for indicating a switching command to a terminal device.

In a fifth aspect, embodiments of the present disclosure provide a communication device. The communication device includes a processor that, when calling a computer program in a memory, executes the method described in the first aspect.

In a sixth aspect, embodiments of the present disclosure provide a communication device. The communication device includes a processor that, when calling a computer program in a memory, executes the method described in the second aspect.

In a seventh aspect, embodiments of the present disclosure provide a communication device. The communication device includes a processor and a memory. The memory is stored with a computer program. The processor is configured to execute the computer program stored in the memory, so as to cause the communication device to implement the method described in the first aspect.

In an eighth aspect, embodiments of the present disclosure provide a communication device. The communication device includes a processor and a memory. The memory is stored with a computer program. The processor is configured to execute the computer program stored in the memory, so as to cause the communication device to implement the method described in the second aspect.

In a ninth aspect, embodiments of the present disclosure provide a communication device, including a processor and an interface circuit. The interface circuit is configured to receive code instructions and transmit the code instructions to the processor; and the processor is configured to run the code instructions, to cause the device to implement the method described in the first aspect.

In a tenth aspect, embodiments of the present disclosure provide a communication device, including a processor and an interface circuit. The interface circuit is configured to receive code instructions and transmit the code instructions to the processor; and the processor is configured to run the code instructions, to cause the device to implement the method described in the second aspect.

In an eleventh aspect, embodiments of the present disclosure provide a communication system. The system includes the communication device as described in the third aspect and the communication device as described in the fourth aspect, or the system includes the communication device as described in the fifth aspect and the communication device as described in the sixth aspect, or the system includes the communication device as described in the seventh aspect and the communication device as described in the eighth aspect, or the system includes the communication device as described in the ninth aspect and the communication device as described in the tenth aspect.

In a twelfth aspect, embodiments of the present disclosure provide a computer readable storage medium, configured to store instructions used by the above network device and/or the above terminal device, which when executed, cause the network device to implement the method described in the first aspect, and/or cause the terminal device to implement the method described in the second aspect.

In a thirteenth aspect, the present disclosure further provides a computer program product including a computer program that, when run on a computer, causes the computer to perform the method described in any of the first aspect or the second aspect.

In a fourteenth aspect, the present disclosure provides a chip system. The chip system includes at least one processor and an interface for supporting the network device to implement the functions involved in the first aspect, and/or supporting the terminal device to implement the functions involved in the second aspect, such as determining or processing at least one of the data and information involved in the above methods. In one possible design, the chip system further includes a memory for storing necessary computer programs and data for the terminal device. This chip system can be composed of chips or include chips and other discrete components.

In a fifteenth aspect, the present disclosure provides a computer program which, when run a computer, causes the computer to implement the method described in any of the first aspect or the second aspect.

### BRIEF DESCRIPTION OF THE DRAWINGS

The above and/or additional aspects and advantages of this disclosure will become apparent and easy to understand from the following description of the embodiments in conjunction with the accompanying drawings.
Fig. 1 is a schematic diagram of an architecture of a communication system provided in an embodiment of the present disclosure.
Fig. 2 is a schematic flowchart of a method for triggering TAR provided in another embodiment of the present disclosure.
Fig. 3 is a schematic flowchart of a method for triggering TAR provided in yet another embodiment of the present disclosure.
Fig. 4 is a schematic flowchart of a method for triggering TAR provided in still yet another embodiment of the present disclosure.
Fig. 5 is a schematic flowchart of a method for triggering TAR provided in another embodiment of the present disclosure.
Fig. 6 is a schematic flowchart of a method for triggering TAR provided in yet another embodiment of the present disclosure.
Fig. 7 is a schematic flowchart of a method for triggering TAR provided in still yet another embodiment of the present disclosure.
Fig. 8 is a schematic flowchart of a method for triggering TAR provided in still yet another embodiment of the present disclosure.
Fig. 9 is a schematic flowchart of a method for triggering TAR provided in still yet another embodiment of the present disclosure.
Fig. 10 is a schematic flowchart of a method for triggering TAR provided in still yet another embodiment of the present disclosure.
Fig. 11 is a schematic flowchart of a method for triggering TAR provided in still yet another embodiment of the present disclosure.
Fig. 12 is a schematic flowchart of a method for triggering TAR provided in still yet another embodiment of the present disclosure.
Fig. 13 is a schematic flowchart of a method for triggering TAR provided in still yet another embodiment of the present disclosure.
Fig. 14 is a schematic flowchart of a method for triggering TAR provided in still yet another embodiment of the present disclosure.
Fig. 15 is a schematic flowchart of a method for triggering TAR provided in still yet another embodiment of the present disclosure.
Fig. 16 is a schematic flowchart of a method for triggering TAR provided in still yet another embodiment of the present disclosure.
Fig. 17 is a schematic flowchart of a method for triggering TAR provided in still yet another embodiment of the present disclosure.
Fig. 18 is a schematic flowchart of a method for triggering TAR provided in still yet another embodiment of the present disclosure.
Fig. 19 is a schematic flowchart of a method for triggering TAR provided in still yet another embodiment of the present disclosure.
Fig. 20 is a schematic flowchart of a method for triggering TAR provided in still yet another embodiment of the present disclosure.
Fig. 21 is a schematic flowchart of a method for triggering TAR provided in still yet another embodiment of the present disclosure.
Fig. 22 is a block diagram of a communication device provided in an embodiment of the present disclosure.
Fig. 23 is a block diagram of a communication device provided in another embodiment of the present disclosure.
Fig. 24 is a block diagram of a communication device provided in an embodiment of the present disclosure.
Fig. 25 is a block diagram of a chip provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although the terms first, second, third, etc. may be used to describe various information in this disclosed embodiment, these terms should not be limited to them. These terms are only used to distinguish information of the same type from each other. For example, without departing from the scope of embodiments of the present disclosure, the first information may also be referred to as the second information, and similarly, the second information may also be referred to as the first information. Depending on the context, the words 'if' and 'in case' used here can be interpreted as 'when' or 'upon' or 'in response to a determination'.

The following provides a detailed description of embodiments of the present disclosure, examples of which are shown in the accompanying drawings, where the same or similar reference numerals throughout represent the same or similar elements. The embodiments described below with reference to the accompanying drawings are exemplary and intended to explain the present disclosure, and should not be construed as limiting the present disclosure.

For ease of understanding, the terms involved in this disclosure are first introduced.

### 1. Timing advance (TA) value

It is used for uplink transmission of the terminal device, and refers to that the terminal device sends data packets in advance according to corresponding instructions.

### 2. Timing advance reporting (TAR)

The terminal device needs to report TAR to the network device to let the network device know the round trip time (RTT) of the UE-gNB, so that the network device can determine the uplink scheduling timing or UL ACK/NACK feedback timing based on RTT.

In order to better understand the method for determining a duration of a sidelink disclosed in embodiments of the present disclosure, the following first describes the communication system applicable to embodiments of the present disclosure.

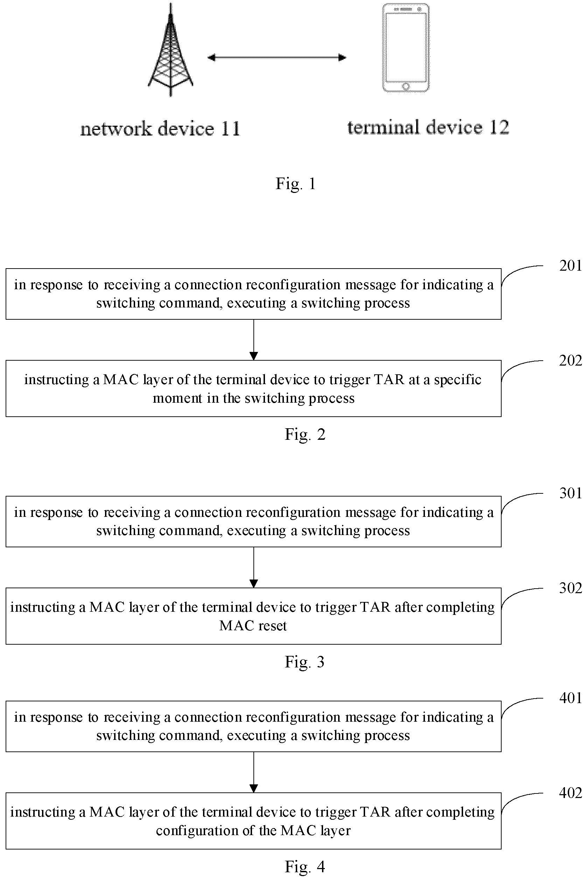

Please refer to Fig. 1, which is a schematic diagram of an architecture of a communication system provided in an embodiment of the present disclosure. The communication system may include, but is not limited to, one network device and one terminal device. The number and form of devices shown in Fig. 1 are for example only and do not constitute a limitation on the embodiments of the present disclosure. In practical applications, it may include two or more network devices and two or more terminal devices. The communication system shown in Fig. 1 takes the example of including one network device 11 and one terminal device 12.

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems.

The network device 11 in embodiments of the present disclosure is an entity on the network side used for transmitting or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system. The specific technology and device form adopted by the network device is not limited in embodiments of the present disclosure. The network device provided in embodiments of the present disclosure may be composed of a central unit (CU) and distributed units (DUs), where the CU may also be referred to as a control unit. The CU-DU structure can be used to separate the protocol layers of the network device, such as the base station, with some protocol layer functions centrally controlled by the CU and the remaining or all protocol layer functions distributed in the DUs, which are centrally controlled by the CU.

The terminal device 12 in embodiments of the present disclosure is an entity on the user side used for receiving or transmitting signals, such as a mobile phone. The terminal device may also be referred to as terminal, user equipment (UE), mobile station (MS), mobile terminal (MT), etc. The terminal device may be communication enabled car, smart car, mobile phone, wearable device, tablet, computer with wireless transmission and reception capabilities, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city and wireless terminal device in smart home, etc. The specific technology and device form adopted by the terminal device is not limited in embodiments of the present disclosure.

It can be understood that the communication system described in embodiments of the present disclosure is for a clearer explanation of the technical solution provided in embodiments of the present disclosure, and does not constitute a limitation on the technical solution provided in embodiments of the present disclosure. Those skilled in the art know that with the evolution of system architecture and the emergence of new business scenarios, the technical solution provided in embodiments of the present disclosure is also applicable to similar technical problems.

The method, apparatus and device for triggering TAR and storage medium provided in embodiments of the present disclosure will be described in detail below with reference to the accompanying drawings.

Please refer to Fig. 2, which is a schematic flowchart of a method for triggering TAR provided in an embodiment of the present disclosure, the method is performed by a terminal device. As shown in Fig. 2, the method for triggering TAR may include but is not limited to the following steps.

In step 201, in response to receiving a connection reconfiguration message for indicating a switching command, a switching process is executed.

For the detailed introduction of the connection reconfiguration message and switching process mentioned above, reference can be made to the description of technologies in the related art.

In step 202, a MAC layer of the terminal device is instructed to trigger TAR at a specific moment in the switching process.

In an embodiment of the present disclosure, the specific moment may include at least one of:
moment after completing MAC reset;
moment after completing configuration of the MAC layer;
moment after completing connection reconfiguration; and
moment after generating a connection reconfiguration complete message.

As can be seen from the above content, in an embodiment of the present disclosure, the MAC layer of the terminal device will be instructed to trigger the TAR after completing the MAC reset or completing configuration of the MAC layer, that is, the TAR will not be triggered before executing the MAC reset or configuring the MAC layer, thus avoiding the situation of "the triggered TAR being mistakenly cancelled due to the execution of the MAC reset" and ensuring that the TAR can be successfully reported.

In another embodiment of the present disclosure, after completing the connection reconfiguration or generating the connection reconfiguration complete message, the MAC layer of the terminal device will be instructed to trigger the TAR, that is, the TAR will not be triggered before executing the connection reconfiguration or generating the connection reconfiguration complete message. This reduces the process required before connection reconfiguration or generating the connection reconfiguration complete message, allowing for timely generation and sending of the reconfiguration complete message, avoiding the situation where the network device mistakenly believe that reconfiguration has failed and reschedule resources for the terminal device due to delayed sending of the connection reconfiguration complete message, and preventing unnecessary waste of resources.

Further, in an embodiment of the present disclosure, the method for instructing the MAC layer of the terminal device to trigger TAR as described above can specifically be: the terminal device instructs the MAC layer of the terminal device to trigger TAR through its Radio Resource Control (RRC) layer.

In summary, in the method for triggering TAR provided in this disclosure, the terminal device executes a switching process in response to receiving a connection reconfiguration message for indicating a switching command, and the terminal device instructs the MAC layer to trigger TAR at a specific moment during the switching process. The specific moment can be at least one of moment after completing MAC reset, moment after completing configuration of the MAC layer, moment after completing connection reconfiguration, or moment after generating a connection reconfiguration complete message. From this, it can be seen that in the method of the present disclosure, the TAR will be triggered after MAC reset or after completing the configuration of the MAC layer, which can avoid the situation of "the triggered TAR being mistakenly cancelled due to the execution of MAC reset" and ensure that the TAR can be successfully reported. In addition, in the method of the present disclosure, TAR will be triggered after completing the connection reconfiguration or generating the connection reconfiguration complete message, which can generate and send the reconfiguration complete message in a timely manner, avoiding the situation where the network device mistakenly believe that the reconfiguration has failed and reschedule resources for the terminal device due to the failure to send the connection reconfiguration complete message in a timely manner, and preventing unnecessary waste of resources.

Fig. 3 is a schematic flowchart of a method for triggering TAR provided in an embodiment of the present disclosure. The method is performed by a terminal device. As shown in Fig. 3, the method for triggering TAR may include the following steps.

In step 301, in response to receiving a connection reconfiguration message for indicating a switching command, a switching process is executed.

In step 302, a MAC layer of the terminal device is instructed to trigger TAR after MAC reset is completed.

For detailed description of steps 301-302, reference can be made to description in above embodiments.

In summary, in the method for triggering TAR provided in this disclosure, TAR will be triggered after MAC reset, which can avoid the situation of "the triggered TAR being mistakenly cancelled due to the execution of MAC reset" and ensure that the TAR can be successfully reported.

Fig. 4 is a schematic flowchart of a method for triggering TAR provided in an embodiment of the present disclosure. The method is performed by a terminal device. As shown in Fig. 4, the method for triggering TAR may include the following steps.

In step 401, in response to receiving a connection reconfiguration message for indicating a switching command, a switching process is executed.

In step 402, a MAC layer of the terminal device is instructed to trigger TAR after configuration of the MAC layer is completed.

For detailed description of steps 401-402, reference can be made to description in above embodiments.

In summary, in the method for triggering TAR provided in this disclosure, TAR will be triggered after completing the configuration of the MAC layer, which can avoid the occurrence of "the triggered TAR being mistakenly cancelled due to the execution of MAC reset" and ensure that TAR can be successfully reported.

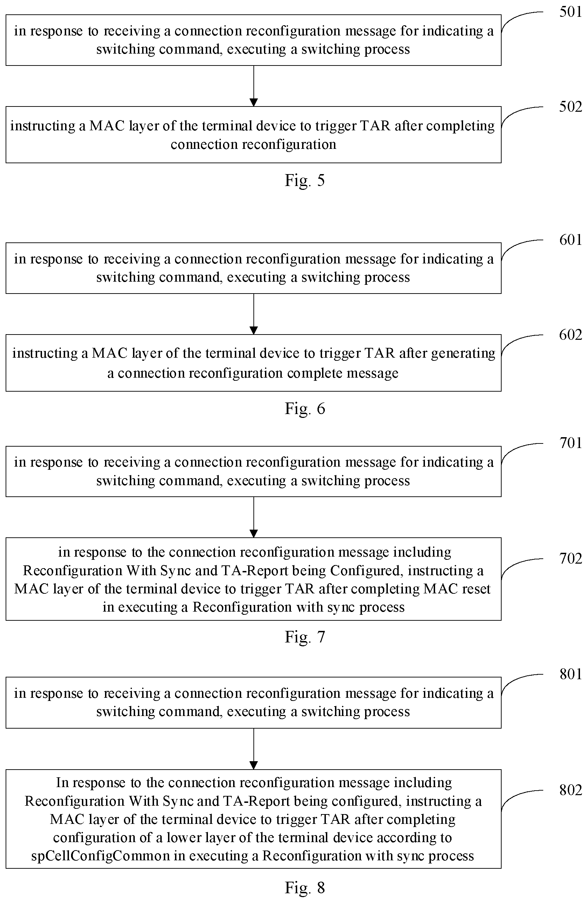

Fig. 5 is a schematic flowchart of a method for triggering TAR provided in an embodiment of the present disclosure. The method is provided by a terminal device. As shown in Fig. 5, the method for triggering TAR may include the following steps.

In step 501, in response to receiving a connection reconfiguration message for indicating a switching command, a switching process is executed.

In step 502, a MAC layer of the terminal device is instructed to trigger TAR after connection reconfiguration is completed.

For detailed description of steps 501-502, reference can be made to description in above embodiments.

In summary, in the method for trigging TAR provided in this disclosure, TAR will be triggered after the completion of connection reconfiguration, which can generate a reconfiguration complete message in a timely manner and send it out in a timely manner, avoiding the situation of "the network device mistakenly recognizes reconfiguration failure and reschedules resources for the terminal device due to the failure to send the connection reconfiguration complete message in a timely manner", and preventing unnecessary waste of resources.

Fig. 6 is a schematic flowchart of a method for triggering TAR provided in an embodiment of the present disclosure. The method is provided by a terminal device. As shown in Fig. 6, the method for triggering TAR may include the following steps.

In step 601, in response to receiving a connection reconfiguration message for indicating a switching command, a switching process is executed.

In step 602, a MAC layer of the terminal device is instructed to trigger TAR after generation of a connection reconfiguration complete message.

For detailed description of steps 601-602, reference can be made to description in above embodiments.

In summary, in the method for triggering TAR provided in this disclosure, TAR will be triggered after generating the connection reconfiguration complete message, which can generate and send the reconfiguration complete message in a timely manner, avoiding the situation that "the network device mistakenly thinks that reconfiguration has failed and reschedules resources for the terminal device due to the failure to send the connection reconfiguration complete message in a timely manner", and preventing unnecessary waste of resources.

Fig. 7 is a schematic flowchart of a method for triggering TAR provided in an embodiment of the present disclosure. The method is performed by a terminal device. As shown in Fig. 7, the method for triggering TAR may include the following steps.

In step 701, in response to receiving a connection reconfiguration message for indicating a switching command, a switching process is executed.

In step 702, in response to the connection reconfiguration information including reconfiguration with sync, and the TAR being configured, a MAC layer of the terminal device is instructed to trigger TAR, after completion of MAC reset in executing a reconfiguration with sync process.

In an embodiment of the present disclosure, the connection reconfiguration message may be a radio resource control reconfiguration (RRCReconfiguration) message.

For detailed introduction of steps 701-702, reference can be made to description in above embodiments.

In summary, in the method for triggering TAR provided in this disclosure, the TAR will be triggered after MAC reset, which can avoid the situation of "the triggered TAR being mistakenly cancelled due to the execution of MAC reset" and ensure that the TAR can be successfully reported.

Fig. 8 is a schematic flowchart of a method for triggering TAR provided in an embodiment of the present disclosure. The method is performed by a terminal device. As shown in Fig. 8, the method for triggering TAR may include the following steps.

In step 801, in response to receiving a connection reconfiguration message for indicating a switching command, a switching process is executed.

In step 802, in response to the connection reconfiguration information including reconfiguration with sync, and the TAR being configured, a MAC layer of the terminal device is instructed to trigger TAR after completing configuration of a lower layer of the terminal device according to special cell common configuration (spCellConfigCommon) in executing a reconfiguration with sync process.

The lower layer of the terminal device may be the MAC layer.

For detailed introduction of steps 801-802, reference can be made to description in above embodiments.

In summary, in the method for triggering TAR provided in this disclosure, TAR will be triggered after completing the configuration of the MAC layer, which can avoid the occurrence of "the triggered TAR being mistakenly cancelled due to the execution of MAC reset" and ensure that TAR can be successfully reported.

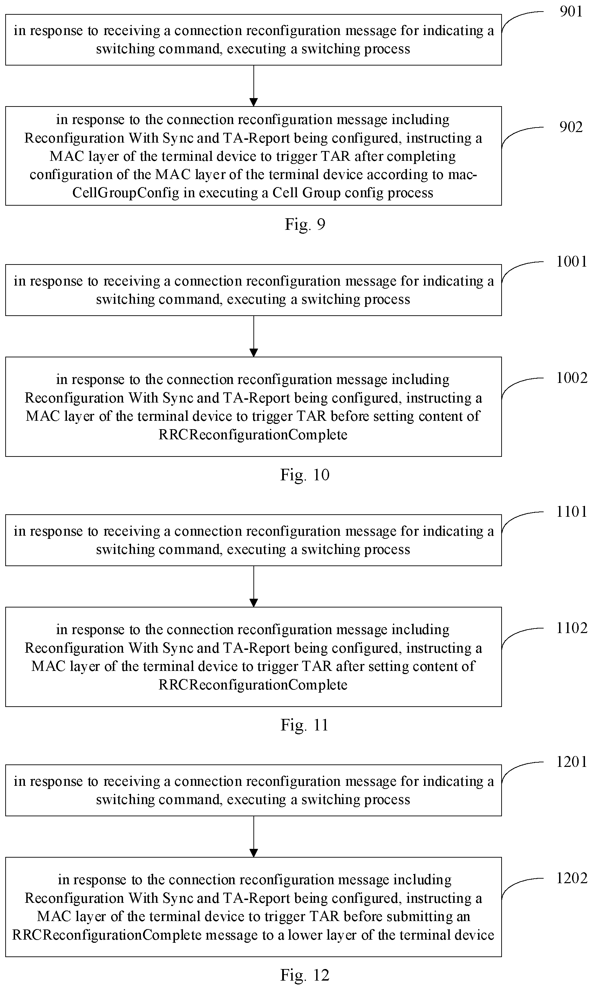

Fig. 9 is a schematic flowchart of a method for triggering TAR provided in an embodiment of the present disclosure. The method is performed by a terminal device. As shown in Fig. 9, the method for triggering TAR may include the following steps.

In step 901, in response to receiving a connection reconfiguration message for indicating a switching command, a switching process is executed.

In step 902, in response to the connection reconfiguration information including reconfiguration with sync, and the TAR being configured, a MAC layer of the terminal device is instructed to trigger TAR after completing configuration of the MAC layer of the terminal device according to MAC cell group configuration (mac-CellGroupConfig) in executing a cell group configuration process.

For detailed introduction of steps 901-902, reference can be made to description in above embodiments.

In summary, in the method for triggering TAR provided in this disclosure, TAR will be triggered after completing the configuration of the MAC layer, which can avoid the situation of "the triggered TAR being mistakenly cancelled due to the execution of MAC reset" and ensure that TAR can be successfully reported.

Fig. 10 is a schematic flowchart of a method for triggering TAR provided in an embodiment of the present disclosure. The method is performed by a terminal device. As shown in Fig. 10, the method for triggering TAR may include the following steps.

In step 1001, in response to receiving a connection reconfiguration message for indicating a switching command, a switching process is executed.

In step 1002, in response to the connection reconfiguration information including reconfiguration with sync, and the TAR being configured, a MAC layer of the terminal device is instructed to trigger TAR before setting content of radio resource control reconfiguration complete (RRCReconfigurationComplete).

For detailed introduction of steps 1001-1002, reference can be made to description in above embodiments.

In summary, in the method for triggering TAR provided in this disclosure, TAR will be triggered after MAC reset or after completing the configuration of the MAC layer, which can avoid the situation of "TAR triggered being mistakenly cancelled due to the execution of MAC reset" and ensure that TAR can be succes sfully reported.

Fig. 11 is a schematic flowchart of a method for triggering TAR provided in an embodiment of the present disclosure. The method is performed by a terminal device. As shown in Fig. 11, the method for triggering TAR may include the following steps.

In step 1101, in response to receiving a connection reconfiguration message for indicating a switching command, a switching process is executed.

In step 1102, in response to the connection reconfiguration information including reconfiguration with sync, and the TAR being configured, a MAC layer of the terminal device is instructed to trigger TAR after setting content of RRCReconfigurationComplete.

For detailed introduction of steps 1101-1102, reference can be made to description in above embodiments.

In summary, in the method for triggering TAR provided in an embodiment of the present disclosure, TAR will be triggered after completing the connection reconfiguration or generating the connection reconfiguration complete message, which can generate and send the reconfiguration complete message in a timely manner, avoiding the situation that "the network device mistakenly believes that the reconfiguration has failed and reschedules resources for the terminal device due to the failure to send the connection reconfiguration complete message in a timely manner", and preventing unnecessary waste of resources.

Fig. 12 is a schematic flowchart of a method for triggering TAR provided in an embodiment of the present disclosure. The method is performed by a terminal device. As shown in Fig. 12, the method for triggering TAR may include the following steps.

In step 1201, in response to receiving a connection reconfiguration message for indicating a switching command, a switching process is executed.

In step 1202, in response to the connection reconfiguration information including reconfiguration with sync, and the TAR being configured, a MAC layer of the terminal device is instructed to trigger TAR before submitting an RRCReconfigurationComplete message to a lower layer of the terminal device.

For detailed introduction of steps 1201-1202, reference can be made to description in above embodiments.

In summary, in the method for triggering TAR provided in an embodiment of the present disclosure, TAR will be triggered after MAC reset or after completing the configuration of the MAC layer, which can avoid the situation of "TAR triggered being mistakenly cancelled due to the execution of MAC reset" and ensure that TAR can be successfully reported.

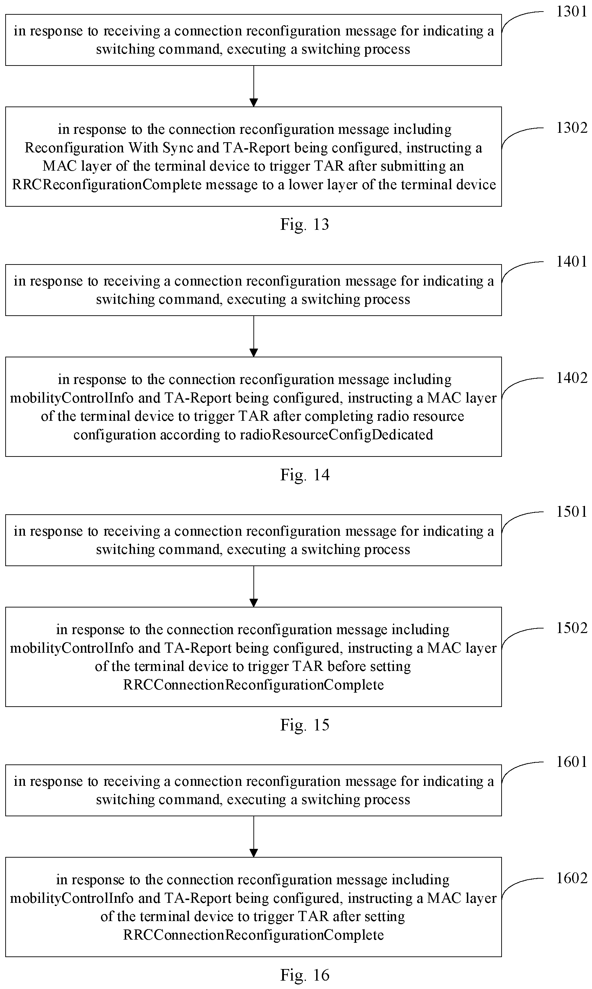

Fig. 13 is a schematic flowchart of a method for triggering TAR provided in an embodiment of the present disclosure. The method is performed by a terminal device. As shown in Fig. 13, the method for triggering TAR may include the following steps.

In step 1301, in response to receiving a connection reconfiguration message for indicating a switching command, a switching process is executed.

In step 1302, in response to the connection reconfiguration information including reconfiguration with sync, and the TAR being configured, a MAC layer of the terminal device is instructed to trigger TAR after submitting an RRCReconfigurationComplete message to a lower layer of the terminal device.

For detailed introduction of steps 1301-1302, reference can be made to description in above embodiments.

In summary, in the method for triggering TAR provided in this disclosure, TAR will be triggered after the completion of connection reconfiguration or the generation of the connection reconfiguration complete message. This enables timely generation and sending of the reconfiguration complete message, avoiding the occurrence of the network device mistakenly believing that reconfiguration has failed and rescheduling resources for the terminal device due to the failure to send the connection reconfiguration complete message in a timely manner, thus preventing unnecessary waste of resources.

Fig. 14 is a schematic flowchart of a method for triggering TAR provided in an embodiment of the present disclosure. The method is performed by a terminal device. As shown in Fig. 14, the method for triggering TAR may include the following steps.

In step 1401, in response to receiving a connection reconfiguration message for indicating a switching command, a switching process is executed.

In step 1402, in response to the connection reconfiguration information including mobility control information (mobilityControlInfo), and the TAR being configured, a MAC layer of the terminal device is instructed to trigger TAR after completing radio resource configuration according to radio resource dedicated configuration (radioResourceConfigDedicated).

The connection reconfiguration message may be a radio resource control connection reconfiguration (RRCConnectionReconfiguration) message.

For detailed introduction of steps 1401-1402, reference can be made to description in above embodiments.

In summary, in the method for triggering TAR provided in this disclosure, TAR will be triggered after MAC reset or after completing the configuration of the MAC layer, which can avoid the situation of "TAR triggered being mistakenly cancelled due to the execution of MAC reset" and ensure that TAR can be successfully reported.

Fig. 15 is a schematic flowchart of a method for triggering TAR provided in an embodiment of the present disclosure. The method is performed by a terminal device. As shown in Fig. 15, the method for triggering TAR may include the following steps.

In step 1501, in response to receiving a connection reconfiguration message for indicating a switching command, a switching process is executed.

In step 1502, in response to the connection reconfiguration information including mobility control information (mobilityControlInfo), and the TAR being configured, a MAC layer of the terminal device is instructed to trigger TAR before setting RRCConnectionReconfigurationComplete.

For detailed introduction of steps 1501-1502, reference can be made to description in above embodiments.

In summary, in the method for triggering TAR provided in this disclosure, TAR will be triggered after MAC reset or after completing the configuration of the MAC layer, which can avoid the situation of "TAR triggered being mistakenly cancelled due to the execution of MAC reset" and ensure that TAR can be successfully reported.

Fig. 16 is a schematic flowchart of method for triggering TAR provided in an embodiment of the present disclosure. The method is performed by a terminal device. As shown in Fig. 16, the method for triggering TAR may include the following steps.

In step 1601, in response to receiving a connection reconfiguration message for indicating a switching command, a switching process is executed.

In step 1602, in response to the connection reconfiguration information including mobility control information (mobilityControlInfo), and the TAR being configured, a MAC layer of the terminal device is instructed to trigger TAR after setting RRCConnectionReconfigurationComplete.

For detailed introduction of steps 1601-1602, reference can be made to description in above embodiments.

In summary, in the method for triggering TAR provided in an embodiment of the present disclosure, TAR will be triggered after completing connection reconfiguration or generating the connection reconfiguration complete message, which can generate the reconfiguration complete message in a timely manner and send it out in a timely manner, avoiding the occurrence of "the network device mistakenly thinking that reconfiguration has failed and rescheduling resources for the terminal device due to the failure to send the connection reconfiguration complete message in a timely manner", and preventing unnecessary waste of resources

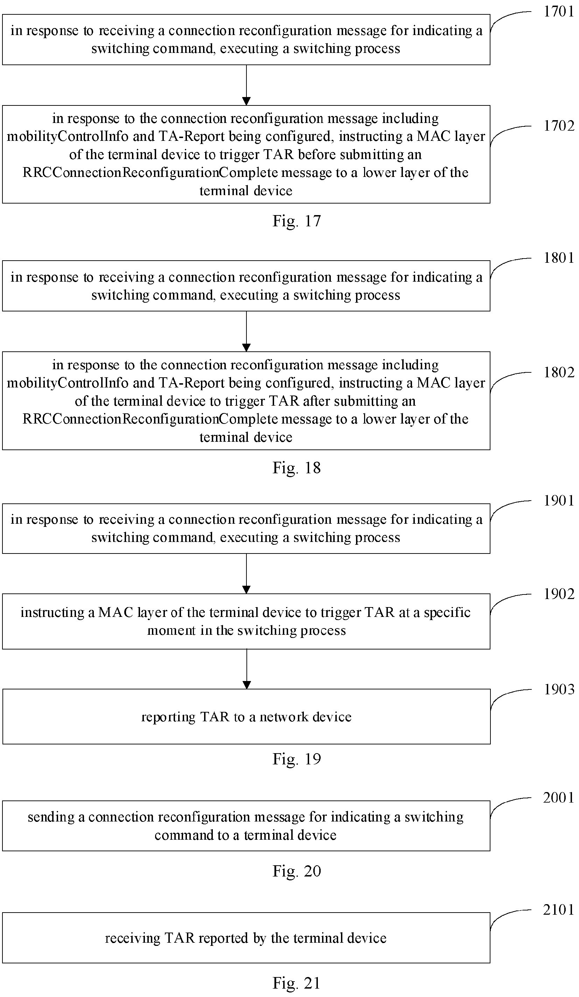

Fig. 17 is a schematic flowchart of a method for triggering TAR provided in an embodiment of the present disclosure. The method is performed by a terminal device. As shown in Fig. 17, the method for triggering TAR may include the following steps.

In step 1701, in response to receiving a connection reconfiguration message for indicating a switching command, a switching process is executed.

In step 1702, in response to the connection reconfiguration information including mobility control information (mobilityControlInfo), and the TAR being configured, a MAC layer of the terminal device is instructed to trigger TAR before submitting a RRCConnectionReconfigurationComplete message to a lower layer of the terminal device.

For detailed introduction of steps 1701-1702, reference can be made to description in above embodiments.

In summary, in the method for triggering TAR provided in this disclosure, TAR will be triggered after MAC reset or after completing the configuration of the MAC layer, which can avoid the occurrence of "the triggered TAR being mistakenly cancelled due to the execution of MAC reset" and ensure that TAR can be successfully reported.

Fig. 18 is a schematic flowchart of a method for triggering TAR provided in an embodiment of the present disclosure. The method is performed by a terminal device. As shown in Fig. 18, the method for triggering TAR may include the following steps.

In step 1801, in response to receiving a connection reconfiguration message for indicating a switching command, a switching process is executed.

In step 1802, in response to the connection reconfiguration information including mobility control information (mobilityControlInfo), and the TAR being configured, a MAC layer of the terminal device is instructed to trigger TAR after submitting a RRCConnectionReconfigurationComplete message to a lower layer of the terminal device.

For detailed introduction of steps 1801-1802, reference can be made to description in above embodiments.

In summary, in the method for triggering TAR provided in this disclosure, TAR will be triggered after completing the connection reconfiguration or generating the connection reconfiguration complete message, which can generate and send the reconfiguration complete message in a timely manner, avoiding the situation where the network device mistakenly believes that the reconfiguration has failed and re-schedule resources for the terminal device due to the failure to send the connection reconfiguration complete message in a timely manner, and preventing unnecessary waste of resources.

In addition, it should be noted that the embodiments shown in Figs. 7-13 correspond to embodiments of a new radio (NR) system, and the embodiments shown in Figs. 14-18 correspond to embodiments of a long term evolution (LTE) system.

Fig. 19 is a schematic flowchart of a method for triggering TAR provided in an embodiment of the present disclosure. The method is performed by a terminal device. As shown in Fig. 19, the method for triggering TAR may include the following steps.

In step 1901, in response to receiving a connection reconfiguration message for indicating a switching command, a switching process is executed.

In step 1902, a MAC layer of the terminal device is instructed to trigger TAR at a specific moment in the switching process.

In step 1903, TAR is reported to a network device.

For detailed introduction of steps 1901-1903, reference can be made to description in above embodiments.

In summary, in the method for triggering TAR provided in this disclosure, in response to receiving a connection reconfiguration message indicating a switching command, the terminal device will perform a switching process; and the terminal device will instruct the MAC layer to trigger TAR at a specific moment during the switching process. The specific moment can be at least one of moment after completing MAC reset, moment after completing configuration of the MAC layer, moment after completing connection reconfiguration, or moment after generating a connection reconfiguration complete message. From this, it can be seen that in the method of the present disclosure, the TAR will be triggered after MAC reset or after completing the configuration of the MAC layer, which can avoid the situation of "the triggered TAR being mistakenly cancelled due to the execution of MAC reset" and ensure that the TAR can be successfully reported. In addition, in the method of the present disclosure, TAR will be triggered after completing the connection reconfiguration or generating the connection reconfiguration complete message, which can generate and send the reconfiguration complete message in a timely manner, avoiding the situation where the network device mistakenly believe that the reconfiguration has failed and reschedule resources for the terminal device due to the failure to send the connection reconfiguration complete message in a timely manner, and preventing unnecessary waste of resources.

Fig. 20 is a schematic flowchart of a method for triggering TAR provided in an embodiment of the present disclosure. The method is performed by a network device. As shown in Fig. 20, the method for triggering TAR may include the following steps.

In step 2001, a connection reconfiguration message for indicating a switching command is sent to a terminal device.

In summary, in the method for triggering TAR provided in this disclosure, in response to receiving a connection reconfiguration message indicating a switching command, the terminal device will perform a switching process; and the terminal device will instruct the MAC layer to trigger TAR at a specific moment during the switching process. The specific moment can be at least one of moment after completing MAC reset, moment after completing configuration of the MAC layer, moment after completing connection reconfiguration, or moment after generating a connection reconfiguration complete message. From this, it can be seen that in the method of the present disclosure, the TAR will be triggered after MAC reset or after completing the configuration of the MAC layer, which can avoid the situation of "the triggered TAR being mistakenly cancelled due to the execution of MAC reset" and ensure that the TAR can be successfully reported. In addition, in the method of the present disclosure, TAR will be triggered after completing the connection reconfiguration or generating the connection reconfiguration complete message, which can generate and send the reconfiguration complete message in a timely manner, avoiding the situation where the network device mistakenly believe that the reconfiguration has failed and reschedule resources for the terminal device due to the failure to send the connection reconfiguration complete message in a timely manner, and preventing unnecessary waste of resources.

Fig. 21 is a schematic flowchart of a method for triggering TAR provided in an embodiment of the present disclosure. The method is performed by a network device. As shown in Fig. 21, the method for triggering TAR may include the following steps.

In step 2101, TAR reported by a terminal device is received.

In summary, in the method for triggering TAR provided in this disclosure, in response to receiving a connection reconfiguration message indicating a switching command, the terminal device will perform a switching process; and the terminal device will instruct the MAC layer to trigger TAR at a specific moment during the switching process. The specific moment can be at least one of moment after completing MAC reset, moment after completing configuration of the MAC layer, moment after completing connection reconfiguration, or moment after generating a connection reconfiguration complete message. From this, it can be seen that in the method of the present disclosure, the TAR will be triggered after MAC reset or after completing the configuration of the MAC layer, which can avoid the situation of "the triggered TAR being mistakenly cancelled due to the execution of MAC reset" and ensure that the TAR can be successfully reported. In addition, in the method of the present disclosure, TAR will be triggered after completing the connection reconfiguration or generating the connection reconfiguration complete message, which can generate and send the reconfiguration complete message in a timely manner, avoiding the situation where the network device mistakenly believe that the reconfiguration has failed and reschedule resources for the terminal device due to the failure to send the connection reconfiguration complete message in a timely manner, and preventing unnecessary waste of resources.

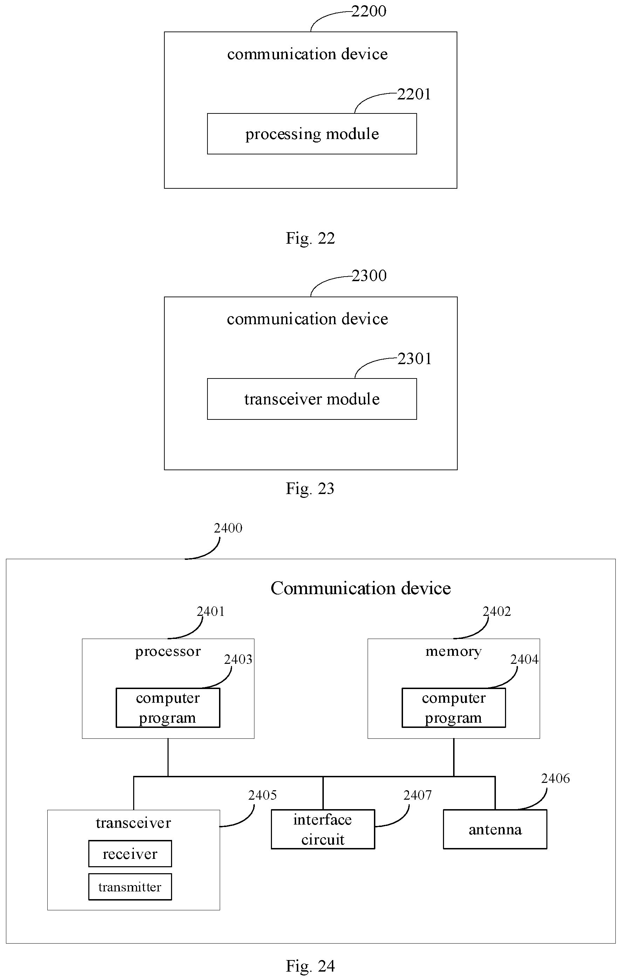

Fig. 22 is a block diagram of a communication device provided in an embodiment of the present disclosure. As shown in Fig. 22, the device may include:

a processing module, configured to execute a switching process in response to receiving a connection reconfiguration message for indicating a switching command;

the processing module is further configured to instruct a MAC layer of the terminal device to trigger TAR at a specific moment in the switching process.

In summary, in the communication device provided in embodiments of the present disclosure, in response to receiving a connection reconfiguration message indicating a switching command, the terminal device will perform a switching process; and the terminal device will instruct the MAC layer to trigger TAR at a specific moment during the switching process. The specific moment can be at least one of moment after completing MAC reset, moment after completing configuration of the MAC layer, moment after completing connection reconfiguration, or moment after generating a connection reconfiguration complete message. From this, it can be seen that in the method of the present disclosure, the TAR will be triggered after MAC reset or after completing the configuration of the MAC layer, which can avoid the situation of "the triggered TAR being mistakenly cancelled due to the execution of MAC reset" and ensure that the TAR can be successfully reported. In addition, in the method of the present disclosure, TAR will be triggered after completing the connection reconfiguration or generating the connection reconfiguration complete message, which can generate and send the reconfiguration complete message in a timely manner, avoiding the situation where the network device mistakenly believe that the reconfiguration has failed and reschedule resources for the terminal device due to the failure to send the connection reconfiguration complete message in a timely manner, and preventing unnecessary waste of resources.

Optionally, in an embodiment of the present disclosure, the specific moment includes at least one of:
moment after completing MAC reset;
moment after completing configuration of the MAC layer;
moment after completing connection reconfiguration; and
moment after generating a connection reconfiguration complete message.

Optionally, in an embodiment of the present disclosure, in response to the connection reconfiguration message including reconfiguration with sync, and TAR being configured, the specific moment includes at least one of:
moment after the terminal device completes MAC reset in executing a reconfiguration with sync process;
moment after the terminal device completes configuration of a lower layer of the terminal device according to special cell common configuration in executing a reconfiguration with sync process;
moment after the terminal device completes configuration of the MAC layer of the terminal device according to MAC cell group configuration in executing a cell group configuration process;
moment before the terminal device sets content of radio resource control reconfiguration complete;
moment after the terminal device sets content of radio resource control reconfiguration complete;
moment before the terminal device submits a radio resource control reconfiguration complete message to a lower layer of the terminal device; and
moment after the terminal device submits a radio resource control reconfiguration complete message to a lower layer of the terminal device.

Optionally, in an embodiment of the present disclosure, in response to the connection reconfiguration message including mobility control information, and TAR being configured, the specific moment includes at least one of:
moment after the terminal device completes radio resource configuration according to radio resource dedicated configuration;
moment before the terminal device sets radio resource control connection reconfiguration complete;
moment after the terminal device sets radio resource control connection reconfiguration complete;
moment before the terminal device submits a radio resource control connection reconfiguration complete message to a lower layer of the terminal device; and
moment after the terminal device submits a radio resource control connection reconfiguration complete message to a lower layer of the terminal device.

Optionally, in an embodiment of the present disclosure, instructing the MAC layer of the terminal device to trigger TAR includes:
instructing the MAC layer of the terminal device to trigger TAR through an RRC layer of the terminal device.

Optionally, in an embodiment of the present disclosure, the method further includes:
reporting TAR to a network device.

Fig. 23 is a block diagram of a communication device provided in an embodiment of the present disclosure. As shown in Fig. 23, the device may include:
a transceiver module, configured to send a connection reconfiguration message for indicating a switching command to a terminal device.

In summary, in the communication device provided in embodiments of the present disclosure, in response to receiving a connection reconfiguration message indicating a switching command, the terminal device will perform a switching process; and the terminal device will instruct the MAC layer to trigger TAR at a specific moment during the switching process. The specific moment can be at least one of moment after completing MAC reset, moment after completing configuration of the MAC layer, moment after completing connection reconfiguration, or moment after generating a connection reconfiguration complete message. From this, it can be seen that in the method of the present disclosure, the TAR will be triggered after MAC reset or after completing the configuration of the MAC layer, which can avoid the situation of "the triggered TAR being mistakenly cancelled due to the execution of MAC reset" and ensure that the TAR can be successfully reported. In addition, in the method of the present disclosure, TAR will be triggered after completing the connection reconfiguration or generating the connection reconfiguration complete message, which can generate and send the reconfiguration complete message in a timely manner, avoiding the situation where the network device mistakenly believe that the reconfiguration has failed and reschedule resources for the terminal device due to the failure to send the connection reconfiguration complete message in a timely manner, and preventing unnecessary waste of resources.

Optionally, the device is further configured to:
receive TAR reported by the terminal device.

Please refer to Fig. 24, which is a block diagram of a communication device 2400 provided in an embodiment of the present disclosure. The communication device 2400 may be a network device, or may be a terminal device, or may be a chip, a chip system, or a processor that supports the network device to implement the above methods, or may be a chip, a chip system, or a processor that supports the terminal device to implement the above methods. This device can be used to implement the methods described in the above method embodiments, which can be referred to in the description of the above method embodiments.

The communication device 2400 may include one or more processors 2401. The processor 2401 may be a general-purpose processor or a dedicated processor, etc. For example, it may be a baseband processor or a central processing unit. The baseband processor can be used to process communication protocols and communication data, while the central processor can be used to control communication devices (such as base stations, baseband chips, terminal devices, terminal device chips, DU or CU, etc.), execute computer programs, and process data from computer programs.

Optionally, the communication device 2400 may also include one or more memories 2402, on which computer programs 2404 may be stored. The processor 2401 executes the computer programs 2404 to enable the communication device 2400 to perform the methods described in the above method embodiments. Optionally, the memory 2402 may also store data. The communication device 2400 and the memory 2402 can be set separately or integrated together.

Optionally, the communication device 2400 may also include a transceiver 2405 and an antenna 2406. The transceiver 2405 can be referred to as a transceiver unit, transceiver machine, or transceiver circuit, etc., used to achieve transceiver functions. The transceiver 2405 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device 2400 may also include one or more interface circuits 2407. The interface circuit 2407 is used to receive code instructions and transmit them to the processor 2401. The processor 2401 executes the code instructions to cause the communication device 2400 to perform the method described in the above method embodiments.

The communication device 2400 is a network device: the transceiver 2405 is used to execute steps in Fig. 20 to Fig. 21.

The communication device 2400 is a terminal device: the transceiver 2405 is used to execute step 1903 in Fig. 19; the processor 2401 is used to execute steps in Fig. 2 to Fig. 18 and steps 1901-1902 in Fig. 19.

In one implementation, the processor 2401 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 2401 may store a computer program 2403 that runs on the processor 2401 and enables the communication device 2400 to perform the method described in the above method embodiments. The computer program 2403 may be fixed in the processor 2401, in which case the processor 2401 may be implemented by hardware.

In one implementation, the communication device 2400 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be a remote terminal device, but the scope of the communication device described in this disclosure is not limited to this, and the structure of the communication device may not be limited by Fig. 24. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal device, intelligent terminal device, cellular phone, wireless device, handheld device, mobile unit, vehicle mounted device, network device, cloud device, artificial intelligence device, etc;
(6) Others and so on.

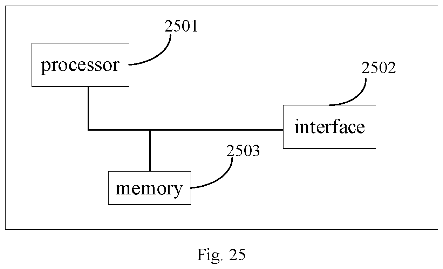

For the communication device that can be a chip or chip system, reference can be made to the schematic diagram of the structure of the chip shown in Fig. 25. The chip shown in Fig. 25 includes processors 2501 and interfaces 2502. The number of processors 2501 can be one or more, and the number of interfaces 2502 can be multiple.

Optionally, the chip also includes a memory 2503 for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The titles in the above tables indicate that the names of the parameters can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in adventure, stored, prestored, pre-negotiated, pre-configured, solidified, or pre-fired.

Those skilled in the art will recognize that the units and algorithm steps described in the embodiments of the present disclosure can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A method for triggering timing advance reporting (TAR), performable by a terminal device, comprising:
in response to receiving a connection reconfiguration message for indicating a switching command, executing a switching process; and
instructing a media access control (MAC) layer of the terminal device to trigger TAR at a specific moment in the switching process.

2. The method of claim 1, wherein the specific moment comprises at least one of:
moment after completing MAC reset;
moment after completing configuration of the MAC layer;
moment after completing connection reconfiguration; or
moment after generating a connection reconfiguration complete message.

3. The method of claim 1 or 2, wherein in response to the connection reconfiguration message comprising reconfiguration with sync, and TAR being configured, the specific moment comprises at least one of:
moment after the terminal device completes MAC reset in executing a reconfiguration with sync process;
moment after the terminal device completes configuration of a lower layer of the terminal device according to special cell common configuration in executing a reconfiguration with sync process;
moment after the terminal device completes configuration of the MAC layer of the terminal device according to MAC cell group configuration in executing a cell group configuration process;
moment before the terminal device sets content of radio resource control reconfiguration complete;
moment after the terminal device sets content of radio resource control reconfiguration complete;
moment before the terminal device submits a radio resource control reconfiguration complete message to a lower layer of the terminal device; or
moment after the terminal device submits a radio resource control reconfiguration complete message to a lower layer of the terminal device.

4. The method of claim 1 or 2, wherein in response to the connection reconfiguration message comprising mobility control information, and TAR being configured, the specific moment comprises at least one of:
moment after the terminal device completes radio resource configuration according to radio resource dedicated configuration;
moment before the terminal device sets radio resource control connection reconfiguration complete;
moment after the terminal device sets radio resource control connection reconfiguration complete;
moment before the terminal device submits a radio resource control connection reconfiguration complete message to a lower layer of the terminal device; or
moment after the terminal device submits a radio resource control connection reconfiguration complete message to a lower layer of the terminal device.

5. The method of claim 1, wherein instructing the MAC layer of the terminal device to trigger TAR comprises:
instructing the MAC layer of the terminal device to trigger TAR through an RRC layer of the terminal device.

6. The method of claim 1, further comprising:
reporting TAR to a network device.

7. A method for triggering timing advance reporting (TAR), performable by a network device, comprising:
sending a connection reconfiguration message for indicating a switching command to a terminal device.

8. The method of claim 7, further comprising:
receiving TAR reported by the terminal device.

9. A communication device, configured in a terminal device, comprising:
a processing module, configured to execute a switching process in response to receiving a connection reconfiguration message for indicating a switching command;
the processing module is further configured to instruct a media access control (MAC) layer of the terminal device to trigger timing advance reporting (TAR) at a specific moment in the switching process.

10. A communication device, configured in a network device, comprising:
a transceiver module, configured to send a connection reconfiguration message for indicating a switching command to a terminal device.

11. A communication device, comprising a processor and a memory, wherein the memory stores a computer program, and the processor is configured to execute the computer program stored in the memory to cause the device to implement the method of any of claims 1 to 6, or the processor is configured to execute the computer program stored in the memory to cause the device to implement the method of claim 7 or 8.

12. A communication device, comprising a processor and an interface circuit, wherein
the interface circuit is configured to receive code instructions and transfer the code instructions to the processor;
the processor is configured to run the code instructions to execute the method of any of claims 1 to 6; or run the code instructions to execute the method of claim 7 or 8.

13. A computer readable storage medium, stored with instructions which, when executed, cause the method of any of claims 1-6 to be implemented, or the method of claim 7 or 8 to be implemented.
